# EUROPEAN PATENT SPECIFICATION

(11) **EP 4 572 635 B1**
(45) Date of publication and mention of the grant of the patent: **21.10.2026**
(21) Application number: 22758009.9
(22) Date of filing: 18.08.2022
(51) Int. Cl.: A47B 9/20

(54) **DAMPENING SYSTEM FOR AN ADJUSTMENT DEVICE AND ADJUSTABLE PIECE OF FURNITURE**
DÄMPFUNGSSYSTEM FÜR EINE VERSTELLVORRICHTUNG UND VERSTELLBARES MÖBELSTÜCK
SYSTÈME D'AMORTISSEMENT POUR UN DISPOSITIF DE RÉGLAGE ET MEUBLE RÉGLABLE

(43) Date of publication of application: 25.06.2025
(73) Proprietor: Steelcase Inc., Grand Rapids, MI 49501 (US)
(72) Inventor: LAZAR, Marius, 80333 München (DE); KELLER, Ralf, 80333 München (DE); PREISS, Jürgen, 80333 München (DE)
(74) Representative: Flach Bauer & Partner Patentanwälte mbB
(86) International application number: PCT/IB2022/020059
(87) International publication number: WO 2024/038294

(56) References cited:
- EP-A1- 2 583 586
- WO-A1-2009/146708
- US-A1- 2005 184 437

## Description

The invention relates to an adjustment device as well as an adjustable piece of furniture.

Adjustable tables with adjustment devices are well known in the art. The adjustment device allows, by use of an actuator, movement of the tabletop with respect to a static component, for example a leg.

When adjusting the height, the components moving with respect to one another create vibration and noise, which may disturb the user of the table or other people in the vicinity of the table.

EP 2 583 586 A1 discloses a telescopic support column with a dampening structure between the tubes. The movable component rests on component, which comprises a force-sensitive sensor. An attenuation element and an operating member are provided between the components.

US 2005/0184437 A1 shows a dampening element for supporting objects, e.g. an engine in a car.

WO 2009/146708 A1 discloses a linear actuator in which a squeeze protection device is arranged, where the device is located in connection with the rear fixture on the motor. The squeeze protection device is based on a piezo element, which as a module is built into the actuator, so that it is passed through by the forces, exerted by the actuator.

It is the object of the invention to provide an adjustment device and an adjustable piece of furniture with reduced vibration and noise emission when the adjustment device is actuated.

For this purpose, an adjustment device for a piece of furniture, in particular a table, according to claim 1 is provided. The adjustment device comprises a first component, a second component and a multi-layered dampening element, wherein the second component is in contact with the first component via at least parts of the dampening element. The dampening element comprises at least one outer layer and at least one dampening layer, wherein the at least one outer layer is made of an elastomer material, and the at least one dampening layer is made of a dampening material being softer than the elastomer material of the outer layer.

By providing a multilayered dampening element having a outer layer which is harder than the dampening layer, it is possible to effectively dampening unwanted noise and vibrations by the dampening layer. Further, the desired stability during use of the furniture (i.e. for writing and reading) is provided by the harder outer layer. Thus, the seemingly opposite requirements of providing vibration dampening and stability are resolved.

For example, the table is in particular a desk.

Within this disclosure, "softer" may mean "having a lower hardness", in particular a smaller Shore A hardness, for example as measured with a Durometer.

The second component is in particular attached to the first component via the dampening element.

In an embodiment, the adjustment device comprises a static component, wherein the first component, the second component and the dampening element are movable with respect to the static component and/or wherein the first component is mounted movably to the static component, thus providing a stable structure.

The first component may be mounted in the static component.

According to the invention, the adjustment device comprises a telescopic support column, wherein at least the first component is part of the telescopic support column, providing a reliably adjustment mechanism.

The static component may also part of the telescopic support column.

For example, the first element is an inner tube and/or the second element is a U-shaped member. The second element may be attached to dampening element by its base.

In an embodiment, the elastomer material is rubber and/or the dampening material is a polyurethane elastomer, making the dampening element cost efficient.

For further improving stability, the elastomer material of the at least one outer layer may have a hardness between 50 to 70 Shore A, in particular between 55 and 65 Shore A.

For further improved noise and vibration reduction, the dampening material may have a hardness between 5 and 50 Shore A, in particular a hardness of 10, 18, 24, 37 or 48 Shore A.

In an embodiment, the at least one dampening layer is arranged between the outer layer and the first component, in particular wherein the outer layer comprises a protrusion extending through the dampening layer. This protrusion allows more precise measurements by a sensor of the first component.

The protrusion may extend fully through the dampening layer, in particular through all dampening layers.

For example, the first component comprises a sensor, in particular a pressure sensor, wherein the protrusion is in contact with the sensor, allowing a very precise control of the movement.

For simplifying the assembly of the adjustment mechanism, the dampening element comprises at least one through hole, in particular for screws, and/or a cutout, in particular for cables.

Particularly, the through holes and/or the cutout extends through all layers of the dampening element.

In an embodiment, the dampening element comprises two outer layers, wherein the at least one dampening layer is arranged between the two outer layers. This arrangement leads to further improved performance.

For example, the outer layers are of the same material and/or the dampening element comprises exactly one dampening layer.

The outer layers may be in contact with the first component and the second component, respectively, in particular with the sides facing away from the dampening layer, thus protecting the dampening layer.

To further simplify assembly, the outer layers may be connected to one another by at least one bridge, wherein the bridge extends along a peripheral surface of the dampening layer.

For example, both outer layers and the at least one bridge are made of a single piece.

In another embodiment, the dampening element comprises two dampening layers, wherein the second component is partly arranged between the two dampening layers, further improving performance.

To improve the performance even further, the outer layer and/or the first component are located at the side of the respective dampening layer facing away from the second component.

For above mentioned purpose, an adjustable piece of furniture, in particular a table, is further provided. The piece of furniture comprises an adjustment device as described above, in particular wherein the piece of furniture comprises a tabletop and/or beam fixed to the second component.

The features and advantages discussed with respect to the adjustment device also apply to the piece of furniture and vice versa.

Further features and advantages will be apparent from the following description as well as the accompanying drawings, to which reference is made. In the drawings:
- Fig. 1: shows a piece of furniture according to an embodiment of the invention with an adjustment device according to an embodiment of the invention in a partially exploded view,
- Fig. 2: shows the adjustment device of Figure 1 in an exploded view,
- Figs. 3, 4: show a dampening element of the adjustment device of Figure 2 in an assembled state and in an exploded view, respectively,
- Fig. 5: shows a dampening element of an adjustment device according to a second embodiment in a perspective view,
- Fig. 6: shows a cross-sectional view of the dampening element of Figure 5 without the dampening layer, and
- Fig. 7: shows an exploded view of an adjustment device of a third embodiment of the invention.

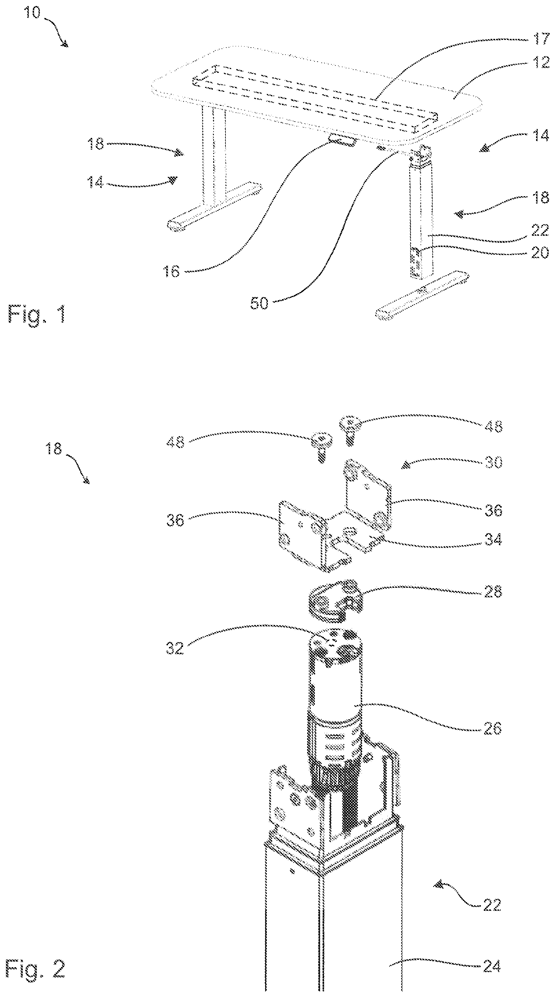

Figure 1 shows a piece of furniture 10 according to an embodiment of the invention.

The piece of furniture 10 comprises a tabletop 12, two legs 14 and an interface device 16.

The piece of furniture 10 is a table, in particular a desk, in the shown embodiment.

The piece of furniture 10 is adjustable in the height direction, i.e. the height of the tabletop above the ground can be adjusted.

Below the tabletop 12, a beam 17 (shown in dashed lines in Figure 1) may extend in the travers direction.

The legs 14 each comprise an adjustment device 18 for adjusting the height of the tabletop 12.

The adjustment device 18 is shown in Figure 2 in a more detailed exploded view. The adjustment device 18 comprises an actuator 20 (Fig. 1), a telescopic support column 22 having at least a static component 24 and a first component 26, a multilayered dampening element 28, and a second component 30.

In the shown embodiment, the static component 24 is an outer tube of the telescopic support column 22 and the first component 26 is an inner tube of the telescopic support column 22.

At its upper surface, the first component 26 may comprise a sensor 32, like a pressure sensor.

The telescopic support column 22 is configured so that the first component 26 is movable with respect to the static component 24 in the height direction actuated by the actuator 20, as per se known in the art.

The second component 30 is a connection component for attaching the part of the piece of furniture 10 that shall be adjustable to the adjustment device 18. In the shown embodiment, the second component 30 is attached to the tabletop 12, either directly or via the beam 17 so that the second component 30 is static with respect to the tabletop 12.

The second component 30 is rigid and may be made of metal.

In the shown embodiment, the second component 30 has a U-shape with a base 34 extending horizontally and two limbs 36 extending upwards from the base 34. The second component 30 can thus be regarded as a U-shaped member.

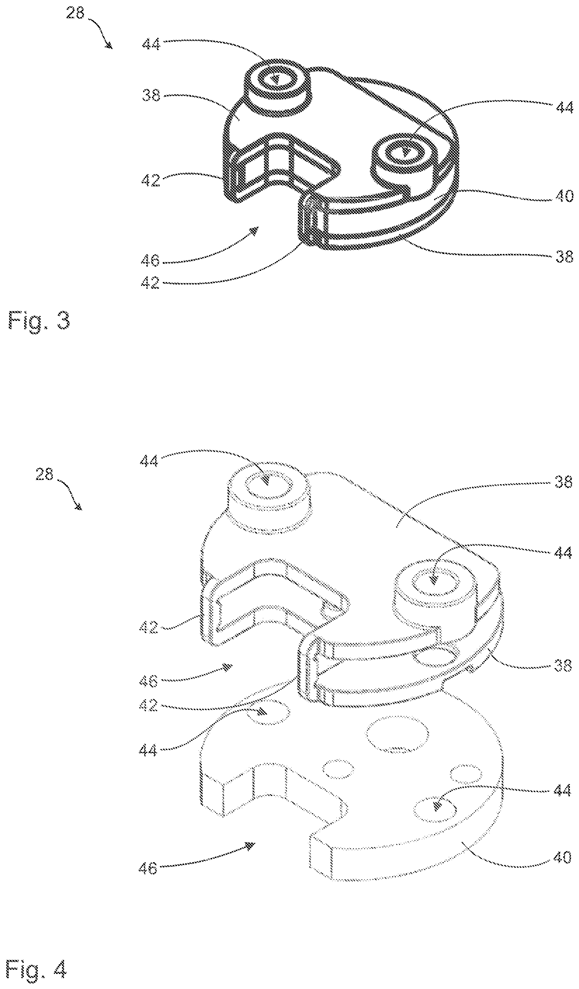

The multilayered dampening element 28 is arranged fully between the first component 26 and the second component 30 in the first embodiment. Figures 3 and 4 show the dampening element 28 in more detail in an assembled, perspective view (Fig. 3) and an exploded view (Fig. 4).

The dampening element comprises, in the shown first embodiment, two outer layers 38 and a dampening layer 40.

The outer layers 38 extend parallel to one another spaced apart by a distance and may be substantially plated-shaped.

The outer layers 38 are connected by two bridges 42 that extend vertically at the outer periphery of the outer layers 38. The outer layers 38 and the bridges 42 together may be formed as a single piece, for example by injection molding.

Both outer layers 38 are of an elastomer material, for example rubber and/or have a hardness between 50 to 70 Shore A, in particular between 55 and 65 shore A, for example as measured with a Shore A Durometer.

The dampening layer 40 may also be plate-shaped and has a thickness that corresponds to the distance between the outer layers 38.

In a vertical projection, the outer layers 38 and the dampening layer 40 have the same outer contour. The dampening layer 40 is thus fully covered by the outer layers 38.

The dampening layer 40 is arranged between the outer layers 38 so that the dampening layer 40 is covered at its bottom and at its top surface by the outer layers 38. The bridges 42 extend across the peripheral surface of the dampening layer 40.

The dampening layer 40 is made of a dampening material, for example a polyurethane elastomer. The dampening material may have a hardness between 5 and 50 Shore A, for example as measured with a Shore A Durometer. In particular, the hardness of the dampening material maybe 10, 18, 24, 37 or 48 shore A.

Therefore, the dampening material and the dampening layer 40 are softer than the elastomer material and the outer layer 38.

Further in the shown embodiment, the dampening element 28 comprises two through holes 44 as well as one cutout 46 extending from a peripheral side.

The through holes 44 as well as the cutout 46 extend vertically fully through the dampening element 28, thus also through all layers 38, 40 of the dampening element 28.

Turning back to Figure 2, in the assembled state the dampening element 28 is affixed between the first component 26 and the second component 30.

The bottom one of the outer layers 38 is thus in contact with the upper end face of the first component 26, in particular with the side facing away from the dampening layer 40.

For the ease of description, o the following the terms "up", "upper" or the like indicate a direction away from the static component. Likewise, "down", "bottom" or the like indicate the direction towards the static component.

The upper one of the outer layers 38 is in contact with the second component 30, in particular with its side facing away from the dampening layer 40. For example, the base 34 of the second component 30 is in contact with the upper outer layer 38 and the limbs 36 extend upwards.

The dampening element 28 and the second component 30 are fixedly attached to the first component 26 and they are movable with respect to the static component 24. Thus, in turn, the tabletop 12 is also movable with respect to the static component 24 and thus the ground.

For example, the base 34 of the second component 30 comprises screw holes aligned with the through holes 44 of the dampening element 28. Screws 48 thus extend through the base 34 of the second component 30 and the entire dampening element 28 and are fastened in the first component 26 in respective threaded holes.

Further, the base 34 may also comprise a cutout aligned with the cutout 46 of the dampening element 28. Through these cutouts, a cable 50 (Fig. 1) from the actuator 20 to the interface device 16 may extend.

By the virtue of the multi-layered dampening element 28 with a dampening layer 40 softer than the outer layer 38, vibrations and noise of the adjustment device 18 are silenced during movement while, at the same time, the stability is provided, that is expected from a piece of furniture, in particular of a desk.

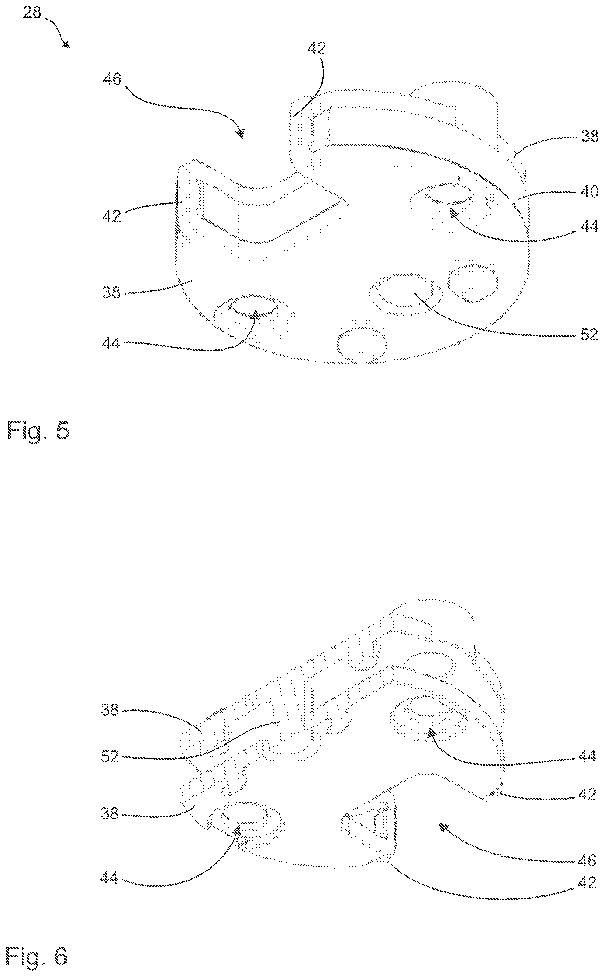

Figures 5 to 7 show further embodiments of an adjustment device 18, which correspond substantially to the first embodiment. Thus, in the following, only the differences are discussed and the same and functionally the same components are labeled with the same reference signs.

Figures 5 and 6 show a dampening element 28 of a second embodiment of the adjustment device 18 in a perspective view onto the bottom one of the outer layers 38 (Fig. 5) and a cross-section of the dampening element 28 without the dampening layer 40 (Fig. 6), respectively.

The dampening element 28 of the second embodiment differs from that of the first embodiment by a protrusion 52.

The protrusion 52 is attached to the upper one of the outer layers 38 and extends from the upper outer layer 38 perpendicular towards the other one of the outer layers 38, e.g. vertically downwards. In particular, the protrusion 52 is part of the single piece of elastomer material forming the outer layers 38 and the bridges 42.

The protrusion 52 may be cylindrical and extends fully through the dampening layer 40 and also through the other outer layer 38 vertically. To this end, both the dampening layer 40 and the bottom outer layer 38 comprise a hole. In particular, the holes are such that the protrusion 52 does not come in contact with the dampening layer 40 or the bottom one of the outer layers 38.

As seen in a top view, the protrusion 52 extends in a center area of the dampening element 28 so that it is horizontally fully surrounded by the dampening layer 40 and the outer layer 38.

In particular, the location of the protrusion 52 is such that it is aligned with the sensor 32 of the first component 26, in particular being in physical contact with the sensor 32.

By the protrusion 52 the quality of the measurement of the sensor 32 is improved.

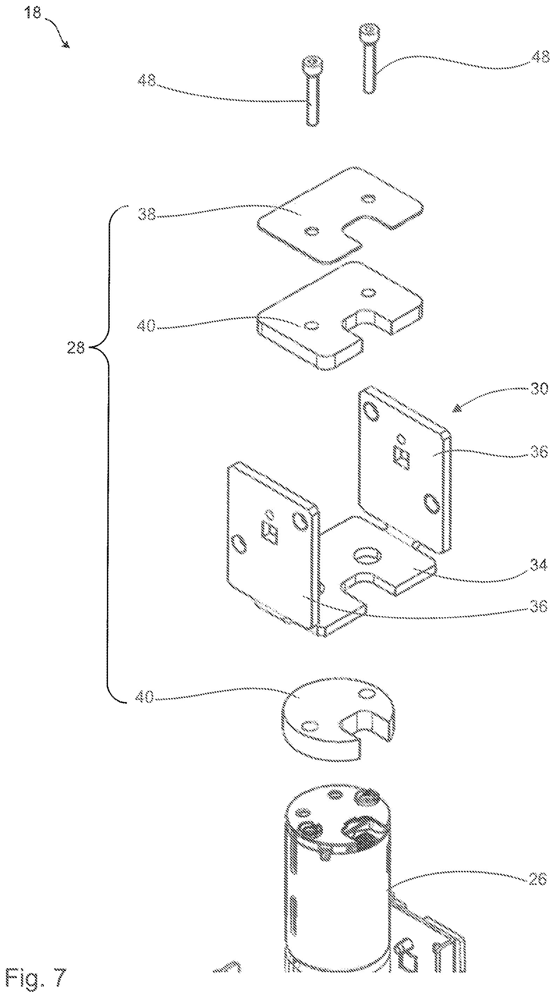

Figure 7 shows a third embodiment of the adjustment device 18 in an exploded view.

The dampening element 28 differs from the dampening element shown in the first embodiment in that only one outer layer 38, namely the upper outer layer 38, is present. Further, the dampening element 28 comprises two dampening layers 40.

The dampening layers 40 may be of the same material or of different material with different hardnesses.

Both dampening layers 40 are arranged below the outer layer 38, i.e. between the outer layer 38 and the first component 26. The lower one of the dampening layers 40 is arranged between the first component 26 and the second component 30, and the upper one of the dampening layers 40 is arranged at the opposite side of the second component 30.

In other words, the second component 30, in particular its base 34, is arranged vertically between the two dampening layers 40.

The outer layer 38 is located on top of the upper one of the dampening layers 40, i.e. on the side of the upper dampening layer 40 facing away from the second component 30.

Seen in a top view, the lower one of the dampening layers 40 may have the same outer contour as the first component 26, the upper one of the dampening layers 40 may have the same outer contour as the base 34 and/or the outer layer 38 may have the same outer contour as the upper dampening layer 40.

As explained with respect to the first embodiment, screws 48 extend through all of the layers 38, 40 of the dampening element 28 and the base 34 of the second component 30, wherein the outer layer 38 supports the screw heads providing stability.

The shown embodiments are only exemplary and the features of the various embodiment may be combined with each other.

## Claims

1. Adjustment device for a piece of furniture (10), in particular a table, comprising a first component (26), a second component (30), a telescopic support column (22) and a multilayered dampening element (28), wherein at least the first component (26) is part of the telescopic support column (22),
wherein the second component (30) is in contact with the first component (26) via at least parts of the dampening element (28),
wherein the dampening element (28) comprises at least one outer layer (38) and at least one dampening layer (40), and
wherein the at least one outer layer (38) is made of an elastomer material and the at least one dampening layer (40) is made of a dampening material being softer than the elastomer material of the outer layer (38).

2. Adjustment device according to claim 1, **characterized in that** the adjustment device (18) comprises a static component (24), wherein the first component (26), the second component (30) and the dampening element (28) are movable with respect to the static component (24) and/or wherein the first component (26) is mounted movably to the static component (24).

3. Adjustment device according to any of the preceding claims, **characterized in that** the elastomer material is rubber and/or the dampening material is a polyurethane elastomer.

4. Adjustment device according to any of the preceding claims, **characterized in that** the elastomer material of the at least one outer layer (38) has a hardness between 50 to 70 Shore A, in particular between 55 and 65 Shore A.

5. Adjustment device according to any of the preceding claims, **characterized in that** the dampening material has a hardness between 5 and 50 Shore A, in particular a hardness of 10, 18, 24, 37 or 48 Shore A.

6. Adjustment device according to any of the preceding claims, **characterized in that** the at least one dampening layer (40) is arranged between the outer layer (38) and the first component (26), in particular wherein the outer layer (38) comprises a protrusion (52) extending through the dampening layer (40).

7. Adjustment device according to claim 6, **characterized in that** the first component (26) comprises a sensor (32), in particular a pressure sensor, wherein the protrusion (52) is in contact with the sensor (32).

8. Adjustment device according to any of the preceding claims, **characterized in that** the dampening element (28) comprises at least one through hole (44), in particular for screws (48), and/or a cutout (46), in particular for a cable (50).

9. Adjustment device according to any of the preceding claims, **characterized in that** the dampening element (28) comprises two outer layers (38), wherein the at least one dampening layer (40) is arranged between the two outer layers (38).

10. Adjustment device according to claim 9, **characterized in that** the outer layers (38) are in contact with the first component (26) and the second component (30), respectively, in particular with the sides facing away from the dampening layer (40).

11. Adjustment device according to claim 9 or 10, **characterized in that** the outer layers (38) are connected to one another by at least one bridge (42), wherein the bridge (42) extends along a peripheral surface of the dampening layer (40).

12. Adjustment device according to any of the claims 1 to 9, **characterized in that** the dampening element (28) comprises two dampening layers (40), wherein the second component (30) is partly arranged between the two dampening layers (40).

13. Adjustment device according to claim 12, **characterized in that** the outer layer (38) and/or the first component (26) are located at the side of the respective dampening layer (40) facing away from the second component (30).

14. Adjustable piece of furniture, in particular a table, comprising an adjustment device (18) according to any of the preceding claims, in particular wherein the piece of furniture (10) comprises a tabletop (12) and/or beam (17) fixed to the second component (30).

## Patentansprüche

1. Verstellvorrichtung für ein Möbelstück (10), insbesondere einen Tisch, umfassend eine erste Komponente (26), eine zweite Komponente (30), eine teleskopische Stützsäule (22) und ein mehrschichtiges Dämpfungselement (28), wobei zumindest die erste Komponente (26) Teil der teleskopischen Stützsäule (22) ist,
wobei die zweite Komponente (30) über zumindest Teile des Dämpfungselements (28) mit der ersten Komponente (26) in Kontakt steht,
wobei das Dämpfungselement (28) mindestens eine Außenschicht (38) und mindestens eine Dämpfungsschicht (40) umfasst, und
wobei die mindestens eine Außenschicht (38) aus einem Elastomermaterial besteht und die mindestens eine Dämpfungsschicht (40) aus einem Dämpfungsmaterial besteht, das weicher ist als das Elastomermaterial der Außenschicht (38).

2. Verstellvorrichtung nach Anspruch 1, **dadurch gekennzeichnet, dass** die Verstellvorrichtung (18) eine statische Komponente (24) umfasst, wobei die erste Komponente (26), die zweite Komponente (30) und das Dämpfungselement (28) in Bezug auf die statische Komponente (24) beweglich sind und/oder wobei die erste Komponente (26) beweglich an der statischen Komponente (24) angebracht ist.

3. Verstellvorrichtung nach einem der vorstehenden Ansprüche, **dadurch gekennzeichnet, dass** das Elastomermaterial Gummi ist und/oder das Dämpfungsmaterial ein Polyurethan-Elastomer ist.

4. Verstellvorrichtung nach einem der vorstehenden Ansprüche, **dadurch gekennzeichnet, dass** das Elastomermaterial der mindestens einen Außenschicht (38) eine Härte zwischen 50 und 70 Shore A, insbesondere zwischen 55 und 65 Shore A, aufweist.

5. Verstellvorrichtung nach einem der vorstehenden Ansprüche, **dadurch gekennzeichnet, dass** das Dämpfungsmaterial eine Härte zwischen 5 und 50 Shore A, insbesondere eine Härte von 10, 18, 24, 37 oder 48 Shore A, aufweist.

6. Verstellvorrichtung nach einem der vorstehenden Ansprüche, **dadurch gekennzeichnet, dass** die mindestens eine Dämpfungsschicht (40) zwischen der Außenschicht (38) und der ersten Komponente (26) angeordnet ist, wobei insbesondere die Außenschicht (38) einen Vorsprung (52) aufweist, der sich durch die Dämpfungsschicht (40) erstreckt.

7. Verstellvorrichtung nach Anspruch 6, **dadurch gekennzeichnet, dass** die erste Komponente (26) einen Sensor (32), insbesondere einen Drucksensor, umfasst, wobei der Vorsprung (52) mit dem Sensor (32) in Kontakt steht.

8. Verstellvorrichtung nach einem der vorstehenden Ansprüche, **dadurch gekennzeichnet, dass** das Dämpfungselement (28) mindestens ein Durchgangsloch (44), insbesondere für Schrauben (48), und/oder einen Ausschnitt (46), insbesondere für ein Kabel (50), aufweist.

9. Verstellvorrichtung nach einem der vorstehenden Ansprüche, **dadurch gekennzeichnet, dass** das Dämpfungselement (28) zwei Außenschichten (38) umfasst, wobei die mindestens eine Dämpfungsschicht (40) zwischen den beiden Außenschichten (38) angeordnet ist.

10. Verstellvorrichtung nach Anspruch 9, **dadurch gekennzeichnet, dass** die Außenschichten (38) jeweils mit der ersten Komponente (26) und der zweiten Komponente (30) in Kontakt stehen, insbesondere mit den von der Dämpfungsschicht (40) abgewandten Seiten.

11. Verstellvorrichtung nach Anspruch 9 oder 10, **dadurch gekennzeichnet, dass** die Außenschichten (38) durch mindestens eine Brücke (42) miteinander verbunden sind, wobei sich die Brücke (42) entlang einer Umfangsfläche der Dämpfungsschicht (40) erstreckt.

12. Verstellvorrichtung nach einem der Ansprüche 1 bis 9, **dadurch gekennzeichnet, dass** das Dämpfungselement (28) zwei Dämpfungsschichten (40) umfasst, wobei die zweite Komponente (30) teilweise zwischen den beiden Dämpfungsschichten (40) angeordnet ist.

13. Verstellvorrichtung nach Anspruch 12, **dadurch gekennzeichnet, dass** die Außenschicht (38) und/oder die erste Komponente (26) an der Seite der jeweiligen Dämpfungsschicht (40) angeordnet sind, die von der zweiten Komponente (30) abgewandt ist.

14. Verstellbares Möbelstück, insbesondere ein Tisch, umfassend eine Verstellvorrichtung (18) nach einem der vorstehenden Ansprüche, insbesondere wobei das Möbelstück (10) eine Tischplatte (12) und/oder einen Träger (17) umfasst, die an der zweiten Komponente (30) befestigt sind.

## Revendications

1. Dispositif de réglage destiné à un meuble (10), notamment une table, comprenant un premier composant (26), un deuxième composant (30), une colonne de support télescopique (22) et un élément d'amortissement (28) multicouche,
au moins le premier composant (26) faisant partie de la colonne de support télescopique (22),
le deuxième composant (30) étant en contact avec le premier composant (26) par l'intermédiaire d'au moins certaines parties de l'élément d'amortissement (28),
l'élément d'amortissement (28) comprenant au moins une couche extérieure (38) et au moins une couche d'amortissement (40), et
l'au moins une couche extérieure (38) étant constituée d'un matériau élastomère et l'au moins une couche d'amortissement (40) étant constituée d'un matériau d'amortissement plus souple que le matériau élastomère de la couche extérieure (38).

2. Dispositif de réglage selon la revendication 1, **caractérisé en ce que** le dispositif de réglage (18) comprend un composant stationnaire (24), le premier composant (26), le deuxième composant (30) et l'élément d'amortissement (28) étant mobiles par rapport au composant stationnaire (24) et/ou le premier composant (26) étant monté de manière mobile sur le composant stationnaire (24).

3. Dispositif de réglage selon l'une quelconque des revendications précédentes, **caractérisé en ce que** le matériau élastomère est du caoutchouc et/ou le matériau d'amortissement est un élastomère à base de polyuréthane.

4. Dispositif de réglage selon l'une quelconque des revendications précédentes, **caractérisé en ce que** le matériau élastomère de l'au moins une couche extérieure (38) présente une dureté comprise entre 50 et 70 Shore A, notamment entre 55 et 65 Shore A.

5. Dispositif de réglage selon l'une quelconque des revendications précédentes, **caractérisé en ce que** le matériau d'amortissement présente une dureté comprise entre 5 et 50 Shore A, notamment une dureté de 10, 18, 24, 37 ou 48 Shore A.

6. Dispositif de réglage selon l'une quelconque des revendications précédentes, **caractérisé en ce que** l'au moins une couche d'amortissement (40) est agencée entre la couche extérieure (38) et le premier composant (26), la couche extérieure (38) comprenant notamment une saillie (52) traversant la couche d'amortissement (40).

7. Dispositif de réglage selon la revendication 6, **caractérisé en ce que** le premier composant (26) comprend un capteur (32), notamment un capteur de pression, la saillie (52) étant en contact avec le capteur (32).

8. Dispositif de réglage selon l'une quelconque des revendications précédentes, **caractérisé en ce que** l'élément d'amortissement (28) comprend au moins un trou traversant (44), notamment pour des vis (48), et/ou une découpe (46), notamment pour un câble (50).

9. Dispositif de réglage selon l'une quelconque des revendications précédentes, **caractérisé en ce que** l'élément d'amortissement (28) comprend deux couches extérieures (38), l'au moins une couche d'amortissement (40) étant agencée entre les deux couches extérieures (38).

10. Dispositif de réglage selon la revendication 9, **caractérisé en ce que** les couches extérieures (38) sont en contact respectivement avec le premier composant (26) et le deuxième composant (30), notamment avec les faces détournées de la couche d'amortissement (40).

11. Dispositif de réglage selon la revendication 9 ou 10, **caractérisé en ce que** les couches extérieures (38) sont reliées entre elles par au moins un pont (42), le pont (42) s'étendant le long d'une surface périphérique de la couche d'amortissement (40).

12. Dispositif de réglage selon l'une quelconque des revendications 1 à 9, **caractérisé en ce que** l'élément d'amortissement (28) comprend deux couches d'amortissement (40), le deuxième composant (30) étant partiellement agencé entre les deux couches d'amortissement (40).

13. Dispositif de réglage selon la revendication 12, **caractérisé en ce que** la couche extérieure (38) et/ou le premier composant (26) sont situés du côté de la couche d'amortissement (40) respective qui est détourné du deuxième composant (30).

14. Meuble réglable, notamment table, comprenant un dispositif de réglage (18) selon l'une quelconque des revendications précédentes, le meuble (10) comprenant notamment un plateau de table (12) et/ou une traverse (17) fixés au deuxième composant (30).
